# EUROPEAN PATENT SPECIFICATION

(11) **EP 2 630 082 B1**
(45) Date of publication and mention of the grant of the patent: **04.04.2018**
(21) Application number: 11776922.4
(22) Date of filing: 19.08.2011
(51) Int. Cl.: C01B 35/10

(54) **DEVELOPMENT OF THE BORIC ACID PRODUCTION PROCESS**
ENTWICKLUNG EINES HERSTELLUNGSVERFAHRENS FÜR BORSÄURE
MISE AU POINT DU PROCÉDÉ DE PRODUCTION D'ACIDE BORIQUE

(30) Priority: 21.10.2010 TR 201008667
(43) Date of publication of application: 28.08.2013
(73) Proprietor: Eti Maden Isletmeleri Genel Mudurlugu, Ankara 06430 (TR)
(72) Inventor: YALCINOGLU, Yucel, 06430 Ankara (TR); UNLU, Fehmi, Ankara (TR); BILEN, Murat, Ankara (TR); ULUDAG, Tumay, Ankara (TR); SENTURK, Bilal, Ankara (TR); AKCIN, Hasan, Ankara (TR); UNALDI, Onur, Ankara (TR); ARITURK, Hakan, 06430 Ankara (TR); YASAR, Yucel, Kutahya (TR)
(74) Representative: Berkkam, Ayfer
(86) International application number: PCT/TR2011/000194
(87) International publication number: WO 2012/053997

(56) References cited:
- EP-A1- 0 343 673
- DE-A1- 4 231 897
- GB-A- 2 114 964
- US-A- 3 397 954
- US-A- 3 791 435
- US-A- 4 578 086
- US-A- 6 080 977
- US-A1- 2009 082 229

## Description

### Technical Field of the Invention

Technique is related to boric acid production method. Our method includes the post-crystallization phase among technical boric acid production methods, produced from colemanite, ulexide and tincal ores. Wet boric acid crystals received from crystallization initially treated in thickener to increase the boric acid crystal ratio (condensation) in the solution; then crystal washing and pre-dewatering processes are conducted on the vacuumed filter to reduce the SO₄ value in the solution received by condensed bottom current of the thickener; boric acid crystals brought to maximum 20% humidity value at the end of pre-dewatering are dried in the microwave energy tunnel type band conveyor dryer up to 0,03%humidity (without wet dust precipitator and hot air (without steam)); the boric acid crystals released from the dryer which are caked (crusted) are transformed into -1mm size in the comminuting-sizing system and technical boric acid is produced.

### State of the art of the Invention (Prior Art)

In the boric acid production process, the solution and boric acid mixture fed to thickener (1.1) is reduced to a particular humidity rate in centrifuge and dried in fluidized bed or tray drier systems with hot water heated with steam. In these processes, the drying air is heated up to 120 °C and the drying process is performed. Energy consumption in present drying systems is excessive. Furthermore, the dried products are fractured and become dust owing to excessive activity. Therefore approximately 5% of the production is optained as powder boric acid. Moreover, a cooling process is conducted to reduce the temperature of the product to 40 °C and less, after drying. Dried products are later on packaged as crystal boric acid and powder boric acid. Post-crystallization thickener centrifuges, fluidized bed drier or tray drier systems, dry dust precipitators, wet dust precipitators, ventilators, product cooling, spirals, screening systems are available in these systems.
In the American Patent document numbered US 4578086 A, a boric acid production method comprising condensation after crystallization, product washing and thereby SO₄ reduction and pre-dewatering, homogenous, moist and thick product feeding, product drying and crystal sizing steps, is disclosed.

In the European Patent document numbered EP 0343673 A1, a method for the production of extra light soda is disclosed. Said method comprises inter alia three heating steps in order to reduce the crystal water content comprised in sodium carbonate, of which the first heating step can optionally be conducted by microwave drying.

In the American Patent document numbered US 6080977A, the use of microwave energy to solidify a solution which comprises amongst other components, borates in a closed vessel is disclosed.

In the American Patent document numbered US 2009/082229 A1, a process for drying boron containing materials, amongst them boric acid is disclosed.

### Brief Description of the Invention

The aim of this invention is to provide a boric acid production method which does not result in powder boric acid.

In the method named 'Development of Boric Acid Production Process', which we developed with our invention; wet mixtures are dissolved in reactor with acid by using colemanite, ulexide and tincal ores in boric acid factories, containing 30-60% solid (boric acid crystals) are filtrated and are fed to thickener. While top current of the thickener is returned to dissolving unit as a dilute solution, the bottom current which consist of 40-70% H₃BO₃ crystalline is dewatered to reduce SO4 value to maximum 300 ppm and to obtain boric acid crystalls with maximum 20% humidity rate at vacuumed filter by crystal washing and pre-dewatering. Humid boric acid crystals which are then placed to vibrating feeder are fed optimally at 10 cm thickness on the microwave dryer band conveyor. Humid boric acid crystals on the band conveyor are dried by applying 1000 watt/unit magnetron power at 2 m/min. band speed without being exposed to vibration activity. In order to prevent crustation (caking) to take place during production and to ensure that crystal surface temperatures are distributed homogenously, fixed mixers, diffusers, roll grinders are utilized. Lastly, dried boric acid crystals are treated in roll and vibrating screen, and technical boric acid is produced, 98% of which having - 1+0,063 mm size, at maximum 40 °C temperature, with maximum 0,03% humidity, 0,74-0,95 g/cm³ bulk density, 99,99% purity and at minimum 56,25% B₂O₃, with H₃BO₃ chemical formulation.

With the method subject of our invention; centrifuges, dry dust precipitators, wet dust precipitators, product cooling systems, filtering systems and screening systems among post-crystallization machines and equipments currently being used in boric acid factories, are completely eliminated. Thus, control and decision steps in the process, number of personnel, electricity energy consumption, and maintenance and repair costs are lowered; steam consumption is also eliminated and a new method which is cheaper, with minimum product loss, providing a more silent and cleaner operation area, is invented.

### Drawings describing the invention

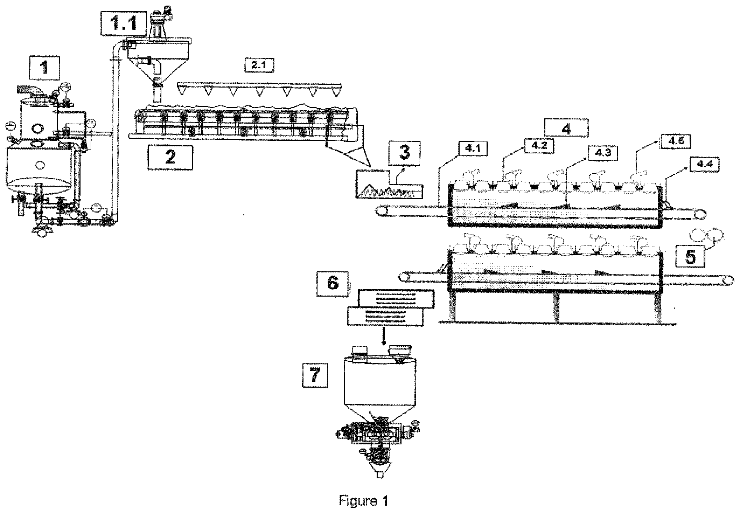

Treatment of wet boric acid crystals received after the boric acid factory crystallizer unit (1) are respectively as the following; dense solid phase and dilute solution are separated in thickener (concentration) (1.1), it is washed in the vacuumed filter (2) by crystal wash jet (2.1) in order to reduce impurity and pre-dewatering is conducted, the moist products are laid on the belt conveyor (4.1) with homogenous thickness by vibrating feeding screen (3), and humid boric acid crystals are dried in the tunnel type band conveyor vacuum microwave energy dryer (4) released from magnetrons (4.2); crustation of crystals are prevented by constant product mixing by fixed mixers (4.3), in the course of drying on band conveyor and temperature of the dried boric acid crystals are dispersed homogenously to the whole product, the boric acid crystals accumulated on the dryer exit band conveyor are dispersed by the diffuser (4.4) placed at the dryer exit, the water steam emerging during drying by vacuuming fans (4.5) is drawn by the low vacuum and released to the atmosphere (without any dust loss), caked (crusted) crystals are grinded by roll grinders (5), the size of boric acid crystals dried and grinded are adjusted by vibrating feeding screen (6), packaging processes of the produced technical boric acid are respectively performed in the packaging (7) unit. The list of machines and equipments required for production of technical boric acid is also present (Figure 1).
1. Crystallizer unit
1.1 Thickener (condensation)
2. Vacuumed filter
2.1 .Crystal wash jet
3. Vibrating feeding screen
4. Microwave dryer (tunnel type, with band conveyor)
4.1 Belt conveyor
4.2 Magnetrons
4.3Fixed mixer
4.4 Diffuser
4.5Vacuuming fans
5. Roll Grinder
6. Vibrating screen
7. Packaging

### Detailed Explanation of the Invention

Our design which is the subject of patent application is an invention created at an industrial size and with industrial application.

### Input Solution of process:

The solution consists of wet boric acid crystals, dissolved in acid in reactors using colemanite, ulexide and tincal ores, filtrated and crystallized in crystallizer.

| | |
|---|---|
| Ratio of solid substance | : 30-60% |
| H₃BO₃ in solid | : 99- 99,99% |
| Water amount | : 40-70% |
| H₃BO₃ in water | : 6-8% |

### Obtained product:

| | | |
|---|---|---|
| Name of the product | : Technical Boric acid | |
| Chemical formulae | : H₃BO₃ | |
| Grade | : 56.25 B₂O₃ min. % | |
| Purity | : 99.90 min % | |
| Na₂O | : 25 ppm max | |
| SO₄ | : 300 ppm max. | |
| Cl | : 7 ppm max | |
| Fe | : 5 ppm max. | |
| Bulk density | : 0,74-0,95 g/cm³ | |
| Surface moisture | : 0,03 max. % | |
| Screening analysis | : +1,000 mm | 1 max % |
| | - 1,000+0,500 mm | 29 % |
| | - 0,500+0,250 mm | 51 % |
| | - 0,250+0,125 mm | 18% |
| | - 0,063 mm | 1 max % |

Technical boric acid products produced in our invention have been analyzed in Eti Mine Works General Management Department of Technology Development Laboratory Division. The standards used were; Master Sizer Malvern 2000 device operating in line with ISO 13320-1 standard for particle size; BS 5688-21;1979 standard for bulk density; BS 5688-8 standard for determination of B₂O₃, BS 5688-15 for humidity determination.

Boric acid crystals supplied from boric acid factory crystallizer unit (1), containing %40-70 wet, 30-60% solid, are initially taken to thickener (1.1). The top current 92-94 % wet, 6-8% H₃BO₃) of the thickener (1.1) is returned to the process as dilute solution. Bottom current (40-70% solid substance, 30-60% water, 99-99,99% H₃BO₃ in solid, 6-8% H₃BO₃ in water) of the thickener (1.1) is fed to the vacuumed filter (2) in order to dewater and reduce SO₄ value. The size of the vacuumed filter may vary according to SO₄ value in the current received from bottom of thickener. Vacuumed filter with low sulfate values can only be used for dewatering. On the other hand, high sulfate values require washing. Wet boric acid crystals washed by nozzles in the vacuumed filter (2) by crystal wash jet (2.1) and transferred. During transfer process, free waters are vacuumed and taken from below the filter. At the end of vacuumed filter (2), the humid boric acid crystals whose SO₄ value is reduced to maximum 300 ppm, and brought to maximum 20% humidity, are taken in the vibrating feeding screen (3).

Vibrating feeding screen (3) feeds the boric acid crystals with maximum 20% humidity at a particular low vibrating speed on the microwave dryer (4) belt conveyor (4.1). With vibrating feeding, the humid boric acid crystals are regularly fed with a homogenous thickness.

In the process subject to our method, humid boric acid crystals laid on the conveyor band with a speed of 2 m/min at a thickness of 2-20 cm (optimum is 10 cm) is dried by being exposed to microwave energy from magnetrons (4.2) each of which is 1000 Watt in the microwave dryer (4) (Figure 1).

While the humid boric acid crystals are carried along the belt conveyor, the crystals are not exposed to vibration. Therefore, the crystals are dried without being fractured or eroded. Microwave energy in the dryer starts to dry the humid boric acid crystals in the center. Since drying begins from the center, heating of the surface waters contained in crystals and the crystals began from the center. Therefore, crustation (caking) takes place at the upper part of the dried crystals. Such crustation takes place at any drying thickness.

While the crystals laid on the band are carried, they are mixed by fixed mixers (4.3); thus the crystals at the bottom whose temperature is increased, are moved to top and the crystals on top are moved to bottom. Fixed mixers (4.3) are assembled in the microwave dryers (4) in a way to polish off and take crystals on the belt conveyor; and placed cross along the belt conveyor in the dryer.

Fixed mixers (4.3) are made up of the material of the band that is Teflon, and are immobile. The fixed mixers (4.3) are used for minimizing crustation of the crystals carried along the band, and ensuring that the heat rising from the crystals is dispersed to all crystals homogenously during drying. Fixed mixers prevent the temperature from exceeding 85°C during drying of boric acid crystals. In Graphic 1, the temperature change in the course of drying of boric acid crystals with 14% humidity, is shown. In the event that there is no mixer; the rising heat is confined in the product due to crustation, water steam cannot be removed and product temperatures exceed 100°C. Such circumstances result in transformation of boric acid (H₃BO₃) to metaboric acid (HBO₂) (Figure 1).

Boric acid crystals dried in the microwave dryer (4) by being mixed; treated in the diffuser (4.4) after exiting dryer which disperse the flake crystals and help homogenously distributing the temperature of dry boric acid crystals. The diffuser (4.4) is placed in the microwave dryer (4) a way to disperse the crystals on the band, to the surface of the band (Figure 1).

Waters being steamed during exposition to drying process in the microwave dryer (4) are drawn by the vacuuming fans (4.5) and released to the atmosphere. Vacuuming fans (4.5) are operated in a low vacuuming capacity in order not to draw boric acid crystals while the water steam is inside the dryer. Dried boric acid crystals should be placed at certain intervals along the band route in order not to be vacuumed. Rather than one fan, more than one fan should be placed along the drying line at certain intervals in the system.

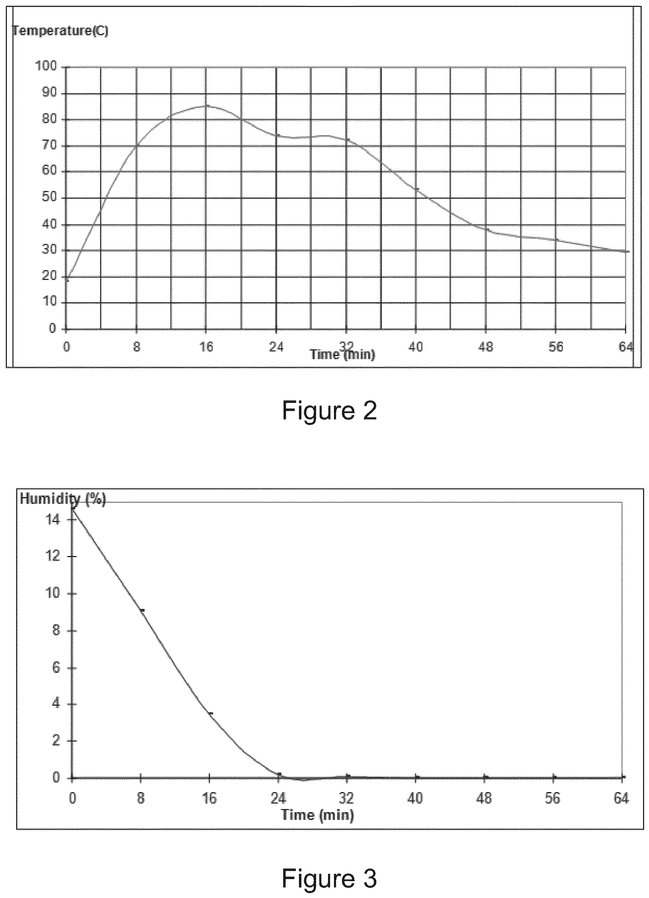

Figure 2. Internal temperature change of the 14% humid boric acid during microwave drying
   In Figure 2, in contrast to rapid increase of the temperature during drying of the 14% humid boric acid, the humidity value rapidly decrease up to 0,15% at the first phase. As from 0,15%, the decrease of the humidity value slows down. With the decrease of humidity ratio, the temperature value of the boric acid crystals also starts to decrease. The temperature of dried boric acid crystals which reach maximum 0,03% humidity value is then at a level between 30-40 °C (Figure 3, Figure 4).
Figure 3. Moisture change of 14% humid boric acid during microwave drying

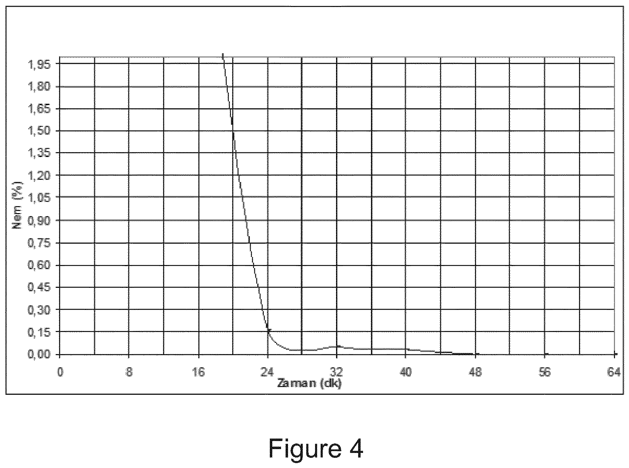

Figure 4. Details of the moisture change of 14% humid boric acid during microwave drying (change between 2% and 0%)
   Microwave dryer (4) can be serially assembled as modules at the demanded length. However, according to our method, the microwave dryer (4) is applied as layered. While the edge length of any layer is not significant, the boric acid crystals should be dried in an at least two layered microwave dryer (4). Thus, both area is limited and operation is facilitated.

Microwave dryer conveyor band length and width varies according to the capacity of the facility. Microwave dryer layer number and the length of belt conveyor at each layer may be adjusted differently according to the area and capacity of the facility.

Since the humidity ratio of the humid boric acid crystal is high at the first phase, the temperature of the crystals, exposed to microwave energy, rise up to 70-85 °C in the first 16 minutes. Caking (crustation) on the top of boric acid crystals start with evaporation of the surface water on the belt conveyor and the ratio of caking decreases by mixture of the crystals on the band.

Roll grinders (5) are used in order to eliminate the caked parts in boric acid crystals, whose humidity ratio is decreased at the end of the 1st layer band. Grinding process is conducted with grinders between every microwave dryer (4) tunnel input and output points. The roll grinder (5) can easily grind the crystals caked under low pressure force, and brings under -1mm size. The water steam emerging during this grinding process are vacuumed by the fan and released to the atmosphere.

The roll grinders (5) are placed at the transfer points between each microwave dryer (4) layer. No microwave energy is applied at the transfer area between two dryers. The temperature of the dried products is significant and temperature control is ensured during mixing the products by fixed mixers (4.3) in the microwave dryer (4), and during grinding of the crusted crystals to less than -1 mm size at the transfer point between 2 microwave dryers (4).

Humid boric acid crystals passing from the roll grinder (5) are poured onto the microwave dryer (4) at the lower layer. The drying process is continued in the same way as the drying process of the 1st phase.

Dried boric acid products taken from the microwave dryer (4) at the last layer are screened by 1 mm sized vibrating screen (6) and +1 mm is transferred to the grinder roll (5) and -1 mm under the screen is transferred to the packaging (7) unit. The temperature of the -1 mm sized under screen delivered to the packaging (7) unit, as well as the products dried to maximum 0,03% humidity do not exceed 40 °C.

The drying duration is dependent on the initial humidity rate of the boric acid crystals and magnetron powers. In our work, approximately 58 minutes is sufficient to dry boric acid with 14% humidity to 0,03% humidity; while approximately 30 minutes is sufficient to dry boric acid with 7% humidity to 0,03%.

The dried technical boric acid products delivered to the packaging (7) unit have H₃BO₃ chemical formulae; minimum 56,25% B₂O₃ grade and % 99.90 purity value; maximum ppm 25 Na₂O, ppm 300 SO₄, ppm 7 Cl and ppm 5 Fe impurity values; 0,74-0,95 g/cm³ bulk density and maximum 0,03% surface moisture. In terms of particle size, the rate of +1,000 is maximum 1%, the rate of -1+0,063 mm is maximum 98%, and the rate of - 0,063 mm is maximum 1%.

Since our system does not involve dusting, further powder boric acid product is not obtained and since there is no dust dispersing around the environment during vacuuming in the microwave dryer (4), a dust precipitation system is not required.

### Examples

Pilot works have been conducted between 1-20 cm drying height at industrial scale regarding 'Development of Boric Acid Production Process' which is subject to our invention, and two of these test works are shown below (the values are mean values received from the production)

### Example-1

| | |
|---|---|
| Crystallizer (1) exit (Thickener input (1.1)) | : Wet boric acid crystals |
| Solid substance rate | : 40% |
| Water amount | : 60% |
| H₃BO₃ in solid | : 99,40% |
| H₃BO₃ in water | : 7,1% |

### Thickener (1.1) bottom current (1.1)

| | |
|---|---|
| (Vacuumed filter (2) input) | : Wet boric acid crystals |
| Solid substance rate | : 60% |
| Water amount | : 40% |
| H₃BO₃ in solid | : 99,22% |
| H₃BO₃ in water | : 7,1% |
| SO₄ | : 5000 ppm |

### Vacuumed filter (2) output

| | |
|---|---|
| Vibrating feeding screen (3) input | : Humid boric acid crystals |
| Water amount (Humidity) | : 14,00% |
| SO₄ | : 300 ppm |
| H₃BO₃ | : 100,60% |

### Vibrating feeding screen (3) output

| | |
|---|---|
| Microwave dryer (4) input | : Humid boric acid crystals |
| Water amount (Humidity) | : 14,00% |
| SO₄ | : 300 ppm |
| H₃BO₃ | : 100,60% |
| Wet product feeding temperature | : 18 °C |
| 14% Humid boric acid bulk density | : 0,95 ton/m³ |

### Microwave Dryer (4) Operation Settings

| | |
|---|---|
| Frequency | : 2,45 GHz |
| Total band length | : 120 meter |
| Dryer band width | : 1 meter |
| Magnetron (4.2) power | : 1000 watt/unit |
| Band speed | : 2,0 meter/minute |
| Drying height | : 10 cm |

### Final product (Packaging (7) Entry)

| | | |
|---|---|---|
| Product temperature | : 38 °C max. | |
| Humidity | : 0,01 max% | |
| SO₄ | : 130 ppm | |
| H₃BO₃ | : 99,99 % | |
| B2O3 | : 56,10% | |
| Bulk density | : 0,74-0,95 g/cm³ | |
| | | |
| Sieve analysis | : +1,000 mm | 0,9% |
| | - 1,000+0,500 mm | 27,5% |
| | - 0,500+0,250 mm | 50,1% |
| | - 0,250+0,125 mm | 20,6% |
| | - 0,063 mm | 0,9% |

### Example-2

| | |
|---|---|
| Crystallizer output (Thickener (1.1) input) | : wet boric acid crystals |
| Solid substance ratio | : 40% |
| Water amount | : 60% |
| In solid H₃BO₃ | : 99,10% |
| In water H₃BO₃ | : 7% |

### Thickener (1.1) bottom current

| | |
|---|---|
| (Vacuumed filter (2) input) | : Sulu boric acid crystals |
| Solid substance ratio | : 62% |
| Water amount | : 38% |
| In solid H₃BO₃ | : 99,84% |
| In water H₃BO₃ | : 7% |
| SO₄ | : 4850 ppm |

### Vacuumed filter (2) output

| | |
|---|---|
| Vibrating feeding screen (3) input | : Humid boric acid crystals |
| Water amount (Humidity) | : 7,00% |
| SO₄ | : 300 ppm |
| H₃BO₃ | : 100,01% |

### Vibrating feeding screen (3) output

| | |
|---|---|
| Microwave dryer (4) input | : Humid boric acid crystals |
| Water amount (Humidity) | : 7% |
| SO₄ | : 250 ppm |
| H₃BO₃ | : 100,10% |
| Wet product feeding temperature | : 18 °C |
| % 14 humid boric acid bulk density | : 0,85 ton/m³ |

### Microwave dryer (4) Operation Settings

| | |
|---|---|
| Frequency | : 2,45 GHz |
| Total band length | : 75 meter |
| Drying band width | : 1 meter |
| Magnetron power | : 1000 watt/unit |
| Band speed | : 2,0 meter/minute |
| Drying height | : 10 cm |

### Final product (Packaging (7))

| | | |
|---|---|---|
| Product temperature | : 36 °C | |
| Humidity | : 0,03 % | |
| SO₄ | : 110 ppm | |
| H₃BO₃ | : 99,98 % | |
| B2O3 | : 56,25 min% | |
| Bulk density | : 0,74-0,95 g/cm³ | |
| | | |
| Screening analysis | : +1,000 mm | 0,9 % |
| | -1,000+0,500 mm | 30,0% |
| | - 0,500+0,250 mm | 49,1% |
| | - 0,250+0,125 mm | 19,0% |
| | - 0,063 mm | 1 % |

**Table 1. Different operation examples in boric acid production processes**

| | | Unit | Example-1 | Example-2 |
|---|---|---|---|---|
| Crystallization output | Solid | % | 40 | 40 |
| | Liquid | % | 60 | 60 |
| | H₃BO₃ in solid | % | 99,40 | 99,1 |
| | H₃BO₃ in liquid | % | 7,1 | 7,0 |
| Thickener (1.1) Bottom Current | Solid | % | 60 | 62 |
| | Liquid | % | 40 | 38 |
| | H₃BO₃ in solid | % | 99,22 | 99,84 |
| | H₃BO₃ in liquid | % | 7,1 | 7,0 |
| Initial feeding humidity | | % | 14 | 7 |
| Drying height | | cm | 10 | 10 |
| Magnetron power | | watt/unit | 1000 | 1000 |
| Wet product feeding amount | | tones/hour | 10,68 | 9,56 |
| Dried boric acid amount | | tones/hour | 9,19 | 8,89 |
| Drying duration | | Minute | 58 | 30 |
| Drying band length | | Meter | 120 | 75 |
| Dried product H₃BO₃ | | % | 99,99 | 99,98 |
| Dried Product Humidity | | % | 0,01 | 0,03 |
| Dried Product Particle Size | + 1,00 mm | % | 0,9 | 0,9 |
| | - 1,00 + 0,063 | % | 98,2 | 98,1 |
| | - 0,063 | % | 0,9 | 1,0 |
| Dried product temperature | | °C | 38 | 36 |
| Maximum temperature of the product during drying process | | °C | 85 | 85 |

In the drying processes subject to our method;
- Vacuuming is performed by vacuuming fans (4.5), at the same time with evaporating
- Performance of mixing by fixed mixer, roll grinding, product transfer among drying layers (ventilation), performance of vacuuming processes by fans in order to prevent crustation during drying further accelerate removal of moisture in the boric acid.

Drying capacity is dependent on the initial humidity ratio (%) and amount (kg) of the boric acid crystals, drying height, band speed and magnetron power. The drying height of the humid acid crystals laid on the band increate the drying capacity (tones/hour) while as magnetron power increase the drying duration decreases and drying capacity increases.

In the method we applied, magnetrons (4.2) in drying part of industrial applications should not be below 1000 Watt. As the magnetron (4.2) power decreases, the power to be supplied from the network will decrease, thus will require a rather wide band length and drying period to conduct drying in industrial drying processes.

In our method, centrifuge, dry dust precipitation, wet dust precipitation, spiral and band conveying systems, dryer exit product cooling systems, among widespread methods, are not required. Thus, crystal fractions resulting from centrifuge are prevented; moreover more effective production is attained by using less machine and equipments; and by reducing energy unit consumptions, maintenance and repair costs and labor expenditures.

With this invention, solutions of 30-60% boric acid crystal received after crystallizer units (1) from boric acid factories are fed to thickener (1.1); thickener is fed to the vacuumed filter after transforming into 40-70% boric acids at the bottom current. Boric acid crystals are washed by shower system on the vacuum filter (2) and at the end of filter, the SO₄ value is brought to maximum 300 ppm, and humidity rate is brought by vacuuming to maximum 20%. The humid boric acid crystals received from the filter exit are transformed to vibrating feeding screen (3). Microwave dryer (4) is fed from the vibrating feeding screen on the belt conveyor (4.1) with a thickness of 2-20 cm (optimally 10 cm). Humid boric acid crystals on the band conveyor are dried to the maximum humidity of 0.03% by using 1000 watt magnetrons (4.2) at optimal 2 m/min. band speed, for approximately 58 minutes to dry 14% humid boric acid; for approximately 30 minutes to dry 7% humid boric acid. The water steam emerging during the drying is released to atmosphere through fans. In order to prevent crustation (caking) to take place during production and to ensure that crystal surface temperatures are distributed homogenously in the method subject to our invention; the crystals got through fixed mixers in the dryer (4.3), diffusers at the dryer exit (4.4), roll grinders (5) and vibrating screen (6), and technical boric acid with 98% of -1+0,063 mm size, at maximum 40 °C temperature, with maximum 0,03% humidity, with 0,74-0,95 g/cm³ bulk density, at 99,99% purity and with H₃BO₃ chemical formulation with minimum 56,25% B₂O₃

## Claims

1. A boric acid production method comprising, condensation after crystallization, product washing, SO₄ reduction and pre-dewatering, product feeding which has homogenous moist and thickness, product mixing, microwave drying and crystal grinding and sizing steps, **characterized in that** the boric acid crystals received as 30-60% wet after crystallization in crystallization unit (1) is transformed into 40-70% boric acid crystal in the thickener; washed in the vacuumed filter (2) by crystal wash jet (2.1) with the purpose of SO₄ reduction and pre-dewatering, the washing water is drawn from below vacuum band; the SO₄ amount of the boric acid crystals are brought to maximum 300 ppm, and the humidity amount is brought to maximum 20% at the end of vacuum filter (2).

2. A production method according to the claim 1, **characterized in that**; the boric acid crystal with maximum 20% humidity received from the SO₄ reduction and pre-dewatering part is fed with the vibrating feeding screen (6) on the microwave dryer (4) belt conveyor (4.1) in order to dry; therefore it is laid on the same width and height as the band; the drying height is minimum 2 cm and varies according to microwave power.

3. A production method according to the claims 1-2, **characterized in that**; drying process is conducted on the humid boric acid crystals in the microwave dryer (4) by exposing to magnetrons (4.2) with at least 1000 watt power; the temperature of boric acid crystals during drying is maximum 85°C degrees, the emerging water steam is drawn by vacuuming fans (4.5) and released to the atmosphere, dust precipitation system is not required since dust boric acid is not vacuumed during vacuuming.

4. A production method according to the claims 1-3, **characterized in that**; product temperature control is ensured during drying and caking (crustation) problems are eliminated; provided by fixed mixers placed in the microwave energy dryer, diffusers placed at the dryer exit, roll grinders placed at the product transfer points between microwave dryer layers.

5. A production method according to the claims 1-4, **characterized in that**; the boric acid crystals drying on the belt conveyor (4.1) are carried without being exposed to vibration activity, at optimum 2 m/min. band speed, the 14% humid boric acid is dried in approximately 58 minutes and 7% humid boric acid is dried in approximately 30 minutes; these durations change according to magnetrons powers.

6. A production method according to the claims 1-5, **characterized in that**; in order to resize boric acid crystals at the dried products received from the drying unit, which remains caked, as below -1mm, resizing below -1 mm by grinding under low pressure force at the roll grinder (5) at the crystal grinding- sizing unit; screening the boric acid products treated in the grinding process, on the 1 mm sized vibrationg screen (6); re-feeding the +1 mm product on screen, to the roll grinder (5); Delivering the -1 mm below screen to the packaging (7) unit and packaging.

7. A production method according to any of the claims above, **characterized in that**; the obtained technical boric acid has minimum 56,25% B₂O₃, 99.99% purity, max SO₄ 300 ppm. 0,74-0,95 g/cm³ bulk density, maximum 0,03% surface moisture, while +1,000 mm rate is maximum 1%, -1+0,063 mm rate is maximum 98%, -0,063 mm rate maximum 1%.

## Patentansprüche

1. Verfahren zur Herstellung von Borsäure, umfassend Kondensation nach Kristallisation, Produktwäsche, SO₄ -Reduktion und Vorentwässerung, Produktzuführung mit homogener Feuchtigkeit und Stärke, Produktmischung, Mikrowellentrocknung und Kristallschleif- und Dimensionierungsschritte, **dadurch gekennzeichnet, dass** die Borsäurekristalle, die nach der Kristallisation in der Kristallisationseinheit (1) zu 30 bis 60% feucht sind, im Eindicker in 40 bis 70% Borsäurekristall umgewandelt werden; in dem Vakuumfilter (2) durch Kristallwaschdüse (2.1) mit dem Zweck der SO₄ -Reduktion und Vorentwässerung gewaschen wird, das Waschwasser von unterhalb des Vakuumbandes abgezogen wird; die SO₄; -Menge der Borsäurekristalle auf maximal 300 ppm gebracht wird, und die Feuchtigkeitsmenge am Ende des Vakuumfilters (2) auf maximal 20% gebracht wird.

2. Herstellungsverfahren nach Anspruch 1, **dadurch gekennzeichnet, dass** der Borsäurekristall mit einer maximalen Feuchtigkeit von 20%, der von dem SO₄ - Reduktions- und Vorentwässerungsteil erhalten wird, mit dem vibrierenden Zuführsieb (6) auf dem Mikrowellentrockner (4) Förderband (4.1) zum Trocknen gespeist wird, und deshalb auf die gleiche Höhe und Breite wie das Band gelegt ist, die Trocknungshöhe mindestens 2 cm beträgt und je nach Mikrowellenleistung variiert.

3. Herstellungsverfahren nach den Ansprüchen 1-2, **dadurch gekennzeichnet, dass** der Trocknungsprozess an den feuchten Borsäurekristallen im Mikrowellentrockner (4) durch Aussetzen an Magnetrons (4.2) mit mindestens 1000 Watt Leistung durchgeführt wird; die Temperatur der Borsäurekristalle während des Trocknens maximal 85°C beträgt, der austretende Wasserdampf durch Sauggebläse (4.5) angesaugt und an die Atmosphäre abgegeben wird, ein Staubausfällungssystem nicht erforderlich ist, da Staubborsäure während des Staubsaugens nicht abgesaugt wird.

4. Herstellungsverfahren nach den Ansprüchen 1-3, **dadurch gekennzeichnet, dass** die Kontrolle der Produkttemperatur während des Trocknens sichergestellt ist und die Bildung von Anbackungen (Krustenbildung) beseitigt ist; bereitgestellt durch feste Mischer, die in dem Mikrowellenenergietrockner angeordnet sind, Diffusoren, die an dem Trocknerausgang angeordnet sind, Walzenschleifer, die an den Produktübergabestellen zwischen Mikrowellentrocknerschichten angeordnet sind.

5. Herstellungsverfahren nach den Ansprüchen 1-4, **dadurch gekennzeichnet, dass** die auf dem Bandförderer (4.1) trocknenden Borsäurekristalle ohne Einwirkung von Vibrationen bei optimalen 2 m/min Bandgeschwindigkeit erfolgt, die 14% feuchte Borsäure in ungefähr 58 Minuten getrocknet wird und 7% feuchte Borsäure in ungefähr 30 Minuten getrocknet wird; wobei diese Dauer sich entsprechend den Magnetron-Kräften ändern.

6. Herstellungsverfahren nach den Ansprüchen 1 bis 5, **dadurch gekennzeichnet, dass**, um die Borsäurekristalle an den getrockneten Produkten, die von der Trocknungseinheit erhalten werden, in der Größe anzupassen, die zusammengebacken bleibt, wie unter -1mm, Verkleinerung unter -1mm durch Schleifen unter geringer Druckkraft am Walzenschleifer (5) an der Kristallschleif-Dimensierungseinheit; Sieben der Borsäureprodukte, die in dem Schleifprozess auf dem 1 mm großen Vibrationsglassieb (6) behandelt wurden; erneutes Zuführen des + 1 mm Produkts auf dem Bildschirm zum Walzenschleifer (5); Liefern der -1 mm unter dem Bildschirm an die Verpackungseinheit (7) und Verpackung.

7. Herstellungsverfahren nach einem der vorangehenden Ansprüche, **dadurch gekennzeichnet, dass** die erhaltene technische Borsäure mindestens 56,25% B₂O₃-Tenor, 99,99% Reinheit, max SO₄ 300 ppm, 0,74-0,95 g/cm³ Schüttdichte, maximal 0,03% Oberflächenfeuchtigkeit hat, während + 1.000 mm Rate maximal 1% ist, -1 + 0.063 mm Rate maximal 98%, -0,063 mm Rate maximal 1% ist.

## Revendications

1. Procédé de production d'acide borique comprenant la condensation après cristallisation, le lavage du produit, la réduction et la déshydratation préalable du SO₄, l'alimentation du produit qui présente une humidité et une épaisseur homogènes, le mélange du produit, le séchage aux micro-ondes et les étapes de broyage et calibrage, **caractérisé en ce que** les cristaux d'acide borique reçus sous forme humide à 30-60% après cristallisation dans l'unité de cristallisation (1) sont transformés en cristaux d'acide borique à 40-70% dans l'épaississant; lavé dans le filtre à vide (2) par un jet de lavage de cristaux (2.1) en vue de la réduction du SO₄ et de la déshydratation préalable, l'eau de lavage est prélevée par le dessous de la bande de vide; la quantité de SO₄ des cristaux d'acide borique est amenée à un maximum de 300 ppm, et la quantité d'humidité est portée à 20% maximum à la fin du filtre à vide (2).

2. Procédé de production selon la revendication 1, **caractérisé en ce que**; le cristal d'acide borique avec une humidité maximale de 20% reçue de la partie de réduction et de déshydratation préalable de SO₄ est alimentée avec l'écran d'alimentation vibrant (6) sur le séchoir à micro-ondes (4) convoyeur à bande (4.1) pour sécher par conséquent, il est posé sur la même largeur et la même hauteur que la bande; la hauteur de séchage est de 2 cm minimum et varie en fonction de la puissance du micro-ondes.

3. Procédé de production selon les revendications 1-2, **caractérisé en ce que**; le processus de séchage est effectué sur les cristaux d'acide borique humide dans le séchoir à micro-ondes (4) en l'exposant à des magnétrons (4.2) ayant une puissance d'au moins 1000 watts; la température des cristaux d'acide borique pendant le séchage est de 85°C maximum, la vapeur d'eau émergente est aspirée par les ventilateurs (4.5) et rejetée dans l'atmosphère, le système de précipitation des poussières n'est pas nécessaire car l'acide borique n'est pas aspiré pendant l'aspiration.

4. Procédé de production selon les revendications 1-3, **caractérisé en ce que**; le contrôle de la température du produit est assuré pendant le séchage et les problèmes d'agglomération (incrustation) sont éliminés; fournis par des mélangeurs fixes placés dans le séchoir à micro-ondes, des diffuseurs placés à la sortie du séchoir, des broyeurs à rouleaux placés aux points de transfert de produit entre les couches de séchage à micro-ondes.

5. Procédé de production selon les revendications 1-4, **caractérisé en ce que**; les cristaux d'acide borique séchant sur le convoyeur à bande (4.1) sont transportés sans être exposés à l'activité vibratoire, à une vitesse optimale de 2 m/min. à la vitesse de la bande, l'acide borique humide à 14% est séché en environ 58 minutes et l'acide borique humide à 7% est séché en environ 30 minutes; ces durées changent en fonction des puissances des magnétrons.

6. Procédé de production selon les revendications 1-5, **caractérisé en ce que**; afin de redimensionner les cristaux d'acide borique sur les produits séchés reçus de l'unité de séchage, qui reste coincé, comme ci-dessous -1 mm, redimensionner au-dessous de -1 mm par meulage sous force de pression basse au broyeur à cylindres (5) unité; le criblage des produits d'acide borique traités dans le processus de broyage, sur l'écran de vibration (6) de 1 mm; réinjecter le produit de + 1 mm sur l'écran, sur le broyeur à cylindres (5); Livrant le -1 mm ci-dessous l'écran à l'emballage (7) unité et emballage.

7. Procédé de production selon l'une quelconque des revendications précédentes, **caractérisé en ce que**; l'acide borique technique obtenu a un teneur minimale de 56,25% B₂O₃, 99,99% pureté, max SO₄ 300 ppm, 0,74-0,95 g/cm³ densité apparente, maximum 0,03% d'humidité de surface, tandis que le taux de + 1,000 mm est maximum de 1%, - 1+0,063 mm taux maximum 98%, -0,063 mm taux maximum 1%.
